# EUROPÄISCHE PATENTSCHRIFT

(11) **EP 2 875 498 B1**
(45) Veröffentlichungstag und Bekanntmachung des Hinweises auf die Patenterteilung: **04.05.2022**
(21) Anmeldenummer: 13733261.5
(22) Anmeldetag: 26.06.2013
(51) Int. Cl.: G08B 13/196, G08B 21/22, H04N 7/18

(54) **ÜBERWACHUNGSSYSTEM MIT POSITIONSABHÄNGIGEM SCHUTZBEREICH, VERFAHREN ZUR ÜBERWACHUNG EINES ÜBERWACHUNGSBEREICHS SOWIE COMPUTERPROGRAMM**
MONITORING SYSTEM WITH A POSITION-DEPENDENT PROTECTED AREA, METHOD FOR MONITORING A MONITORING AREA AND COMPUTER PROGRAM
SYSTÈME DE SURVEILLANCE À ZONE DE PROTECTION DÉPENDANTE DE LA POSITION, PROCÉDÉ DE SURVEILLANCE D'UNE ZONE À SURVEILLER ET PROGRAMME INFORMATIQUE

(30) Priorität: 18.07.2012 DE 102012212613
(43) Veröffentlichungstag der Anmeldung: 27.05.2015
(73) Patentinhaber: Robert Bosch GmbH, 70442 Stuttgart (DE)
(72) Erfinder: HEIGL, Stephan, 30173 Hannover (DE); FILLBRANDT, Holger, 31162 Bad Salzdetfurth (DE); REXILIUS, Jan, 30171 Hannover (DE); MATTERN, Frank, 91207 Lauf An Der Pegnitz (DE); GOTTSCHLAG, Daniel, 90419 Nuernberg (DE); WARZELHAN, Jan Karl, 31162 Bad Salzdetfurth Ot Heinde (DE)
(86) Internationale Anmeldenummer: PCT/EP2013/063355
(87) Internationale Veröffentlichungsnummer: WO 2014/012753

(56) Entgegenhaltungen:
- EP-A1- 1 403 817
- EP-A1- 1 403 817
- EP-A1- 1 713 275
- EP-A1- 1 713 275
- EP-A1- 2 442 286
- EP-A1- 2 442 286
- EP-A2- 1 703 437
- EP-A2- 1 703 437
- WO-A1-97/04428
- US-A1- 2009 189 983
- US-A1- 2009 189 983
- US-A1- 2010 194 566
- US-A1- 2010 194 566

## Beschreibung

### Stand der Technik

Die Erfindung betrifft ein Überwachungssystem zur Überwachung eines Überwachungsbereichs mit einer Eingangsschnittstelle zur Übernahme von Überwachungsbildern des Überwachungsbereichs, mit einem Lokalisierungsmodul zur Lokalisierung von mindestens einem bewegten Überwachungsobjekt in dem Überwachungsbereich, wobei das Lokalisierungsmodul ausgebildet ist, eine Position des Überwachungsobjekts zu lokalisieren, mit einem Definitionsmodul zur Definition von einem positionsabhängigen Schutzbereich in dem Überwachungsbereich und mit einem Überwachungsmodul zur Überwachung des Schutzbereichs.

Überwachungen von öffentlichen Plätzen, Gebäuden, Fertigungshallen etc. mittels Überwachungskameras werden heutzutage vielfach eingesetzt. Die Auswertung der von den Überwachungskameras erzeugten Bilddatenströme wird oftmals durch Sicherheitspersonal durchgeführt, welches die Bilddatenströme auf Monitoren dargestellt bekommen und diese visuell prüfen. Wie Untersuchungen gezeigt haben, sinkt die Aufmerksamkeit von eingesetztem Sicherheitspersonal über die Zeit, so dass statistisch betrachtet bereits nach ca. 20 Minuten relevante Aktivitäten in den Bilddatenströmen übersehen werden. Um die Überwachungssicherheit zu verbessern, werden automatische Videoanalysen eingesetzt, welche die Bilddatenströme mittels digitaler Bildverarbeitung untersuchen und auf diese Weise automatisiert relevante Aktivitäten erkennen und melden können. Aus dem Zusammenspiel der visuellen Prüfung durch das Sicherheitspersonal und der automatisierten Überwachung auf Basis der Videoanalysen kann eine sehr hohe Überwachungssicherheit erreicht werden.

Die Druckschrift DE 10 2007 041 893 A1 beschreibt ein Verfahren sowie eine Vorrichtung zur Detektion und/oder Verfolgung von bewegten Objekten in einer Überwachungsszene. In der Überwachungsszene werden mehrere statische Regionen definiert, die selektiv beobachtet werden. Es ist vorgesehen, dass in jeder der selektierten Regionen unterschiedliche Überwachungsregeln angewendet werden. Die Regionen sind als Bereiche in der Überwachungsszene definiert.

Aus der Druckschrift EP 1 713 275 A1 ist ein Überwachungssystem bekannt mit einer Mehrzahl an Kameras. Jede der Kameras umfasst eine Bilderfassungseinrichtung, die ein Bild von einem Bilderfassungsbereich mit einem Überwachungsbereich erfasst, wobei die Bilderfassungseinrichtung den Bilderfassungsbereich ändert.

Die Druckschrift EP 2 442 286 A1 offenbart eine Erfassungsvorrichtung mit einem Personenerfassungsabschnitt, welcher zur Erfassung der Position von Personen ausgebildet ist, mit einem Personenverfolgungsabschnitt für eine kontinuierliche Verfolgung der Position von einer Person und mit einem verdächtigen Personenerfassungsabschnitt zur Erfassung einer verdächtigen Person in Abhängigkeit von dem ausgewerteten Ergebnis des Personenverfolgungsabschnitts.

Die Druckschrift US 2009/189983 A1 beschreibt ein System und ein Verfahren, das eine musterbasierte Video- und Audioüberwachung für abhängige Individuen wie zum Beispiel Kinder und Ältere bereitstellt. Die Videoaufnahmen werden mit den konfigurierten Positionen verglichen, um eine Position von dem abhängigen Individuum zu klassifizieren. Weiterhin werden die Videoaufnahmen analysiert, um zu bestimmen, ob das abhängige Individuum allein oder mit weiteren Personen unterwegs ist.

Aus der Druckschrift EP 1 703 437 A2 ist ein Überwachungssystem offenbart, mit einer Gesichterfassungseinheit, das eine Gesichtserkennung von einem sich nähernden Individuum erkennt. Eine Vergleichseinheit identifiziert das sich nähernde Individuum durch Vergleichen der charakteristischen Menge des sich annähernden Individuums mit der charakteristischen Menge von einem berechtigten Individuum.

Die Druckschrift EP 1 403 817 A1 beschreibt einen Detektor für abnormales Verhalten durch die Überwachung von sich bewegenden Objekten wie ein Mensch oder ein Auto. Ein Verhaltensdetektor umfasst Mittel für das Bestimmen der Position des sich bewegenden Objekts und der Richtung, in die sich das bewegende Objekt bewegt, Mittel für Bestimmen der Position, wo ein abnormales Ereignis eines abnormales Verhalten des bewegenden Objekts auftritt, Mittel für das Anzeigen der Position zum abnormalen Ereignis.

In der Druckschrift WO 97/04428 A1 ist ein interaktives Überwachungssystem sowie ein Verfahren zum Überwachen bzw. Beobachten eines räumlichen Bereiches mittels einer Echtzeit-Bildauswertung einer oder mehrerer Kameras offenbart.

Die Druckschrift US 2010/194566 A1 beschreibt ein Überwachungssystem mit einer Erkennungseinheit, einer Verfolgungseinheit, einer Platzbewertungseinheit und einer Berichteinheit. Wenn ein unerlaubtes Objekt einen Überwachungspunkt passiert, erkennt die Erkennungseinheit das unerlaubte Objekt als ein betrügerisches Objekt. Die Verfolgungseinheit verfolgt die Position des betrügerischen Objekts, das durch die Erkennungseinheit erfasst wurde. Die Platzbewertungseinheit bewertet, ob das betrügerische Objekt sich innerhalb eines vorbestimmten Bereichs befindet. Die Berichteinheit berichtet die Position des betrügerischen Materials und das durch die Berichteinheit ausgewertete Ergebnis.

### Offenbarung der Erfindung

Im Rahmen der Erfindung wird ein Überwachungssystem mit den Merkmalen des Anspruchs 1 vorgeschlagen. Bevorzugte oder vorteilhafte Ausführungsformen der Erfindung ergeben sich aus den Unteransprüchen, der nachfolgenden Beschreibung sowie den beigefügten Figuren.

Die Erfindung betrifft ein Überwachungssystem zur Überwachung eines Überwachungsbereichs. Der Überwachungsbereich ist beispielsweise ein öffentlicher Platz, ein Unternehmensgelände, ein oder mehrere Räume in einem Gebäude, eine Straßenkreuzung, eine oder mehrere Straßen etc.

Das Überwachungssystem umfasst eine Eingangsschnittstelle, welche zur Übernahme von Überwachungsbildern des Überwachungsbereichs ausgebildet ist. Die Überwachungsbilder zeigen den Überwachungsbereich oder einen Teilabschnitt davon. Besonders bevorzugt bilden die Überwachungsbilder eine Bildersequenz, sodass der Überwachungsbereich bzw. der Teilabschnitt davon zu verschiedenen Zeitpunkten gezeigt ist. Insbesondere bilden die Überwachungsbilder ein Überwachungsvideo.

Das Überwachungssystem kann mit einer Speichereinrichtung verbunden sein, auf der die Überwachungsbilder abgelegt sind. Alternativ oder ergänzend ist das Überwachungssystem mit einer oder mehreren Überwachungskameras verbunden, welche auf den Überwachungsbereich gerichtet sind und die Überwachungsbilder bereitstellen. Optional umfasst das Überwachungssystem die eine oder mehrere Überwachungskameras und/oder die Speichereinrichtung.

Das Überwachungssystem umfasst ein Lokalisierungsmodul, welches zur Lokalisierung von mindestens einem bewegten Überwachungsobjekt in dem Überwachungsbereich ausgebildet ist. Das bewegte Überwachungsobjekt ist insbesondere ein Objekt, welches sich in einem stationären oder quasistationären Hintergrund des Überwachungsbereichs bewegt. Beispielsweise ist das Überwachungsobjekt als eine oder mehrere Personen, ein Fahrzeug, ein Auto, ein Paket, ein Fahrrad etc. ausgebildet. Das Lokalisierungsmodul ist ausgebildet, eine Position des Überwachungsobjekts insbesondere in dem Überwachungsbereich zu lokalisieren. Als Ergebnis kann das Lokalisierungsmodul vorzugsweise eine aktuelle Position des Überwachungsobjekts ausgeben. Das bewegte Objekt muss sich nicht ständig bewegen, es ist auch möglich dass das bewegte Objekt temporär an einer Position verbleibt.

Ferner umfasst das Überwachungssystem ein Definitionsmodul, welches zur Definition von einem positionsabhängigen Schutzbereich ausgebildet ist, sowie ein Überwachungsmodul, welches zur Überwachung des Schutzbereichs ausgebildet ist. Über das Definitionsmodul kann ein Schutzbereich insbesondere in dem Überwachungsbereich definiert werden, welcher mittels einer Positionsangabe festgelegt ist. Das Überwachungsmodul ist ausgebildet, die Überwachung in Abhängigkeit des positionsabhängigen Schutzbereichs durchzuführen. Damit ist es möglich, Teilbereiche in dem Überwachungsbereich zu überwachen und andere Teilbereiche unüberwacht zu belassen. Insbesondere ist es möglich, den Schutzbereich an "Bereichen von Interesse" (ROI - Region of Interest) anzupassen. Der Schutzbereich ist insbesondere als ein Teilbereich, insbesondere als ein räumlicher Teilbereich des Überwachungsbereichs ausgebildet. Im speziellen kann der Schutzbereich durch eine Fläche, z.B. auf einem Boden des Überwachungsbereichs, oder durch ein Volumen in dem Überwachungsbereich realisiert sein.

Im Rahmen der Erfindung wird vorgeschlagen, dass das Definitionsmodul ausgebildet ist, den positionsabhängigen Schutzbereich in Abhängigkeit von der Position des bewegten Überwachungsobjekts zu definieren, wobei die Position durch das Lokalisierungsmodul lokalisiert ist. Insbesondere ist das Definitionsmodul ausgebildet, den Schutzbereich bei einer ersten Position des Überwachungsobjekts anders als bei einer zweiten Position des Überwachungsobjekts zu definieren sofern sich die erste und die zweite Position des Überwachungsobjekts unterscheiden.

Es ist ein Vorteil der Erfindung, dass Schutzbereiche nicht nur - wie bislang bekannt - statisch in dem Überwachungsbereich definiert werden können, sondern in Abhängigkeit eines bewegten Überwachungsobjekts definierbar sind. Damit ist es möglich, dem Überwachungsobjekt einen Schutzbereich zuzuordnen, der mit dem Überwachungsobjekt mitbewegt wird oder diesem nachgeführt wird.

Es ist auch möglich, dem bewegten Überwachungsobjekt den Schutzbereich - vorzugsweise als einen individualisierten virtuellen Schutzschild - zuzuordnen, wobei der Schutzbereich bei jeder Positionsänderung des Überwachungsobjekts in dem Überwachungsbereich mitgeführt wird. Dies hat den Vorteil, dass die Überwachungssicherheit für das Überwachungsobjekt deutlich verbessert werden kann.

Bei einer bevorzugten Ausgestaltung der Erfindung ist das Überwachungsobjekt als eine Person oder als ein Fahrzeug ausgebildet. Bei beiden Ausführungsalternativen erlaubt der mitgeführte oder nachgeführte Schutzbereich eine verbesserte Überwachung des Überwachungsobjekts.

So ist es beispielsweise möglich, wahlweise eine verdächtige Person mit einem Schutzbereich zu versehen, sodass das Überwachungspersonal automatisch überwachen kann, mit wem sich die verdächtige Person getroffen hat. Dabei werden automatisch alle Personen detektiert, mit denen sich die verdächtige Person getroffen hat, indem überwacht wird, welche Personen den Schutzbereich der verdächtigen Person kontaktiert haben.

Alternativ hierzu kann auch eine zu schützende Person mit einem Schutzbereich versehen werden, der der zu schützenden Person nachgeführt wird, wobei automatisiert überwacht wird, ob andere Personen in den Schutzbereich der zu schützenden Person eindringen, um auf diese Weise z.B. einen Angriff oder dergleichen auf die zu schützende Person automatisch zu erkennen.

Neben der Überwachung von Personen kann der mitgeführte Schutzbereich auch bei anderen Überwachungsobjekten eingesetzt werden. Z.B. kann ein Fahrzeug, insbesondere ein Gefahrguttransporter, überwacht werden, wobei der mitgeführte Schutzbereich z.B. sicherstellt, dass ein bestimmter Mindestabstand zum Fahrzeug eingehalten wird. Bei einem Eindringen von anderen Fahrzeugen, Personen oder Objekten in den Schutzbereich wird darauf geschlossen, dass der Mindestabstand zum Fahrzeug verletzt ist. Als Reaktion auf die Kontaktierung des Schutzbereichs kann über das Überwachungsmodul z.B. ein automatisierter Alarm ausgelöst werden.

Bei allen genannten Beispielszenarien wird durch das Überwachungssystem die Überwachung durch die Definition des bewegten Schutzbereichs stark vereinfacht.

Bei einer ersten möglichen Ausführungsform der Erfindung wird der Schutzbereich durch eine Linie, insbesondere mindestens oder genau eine Linie oder ein Linienzug, also eine nicht geradlinig verlaufende Linie, in der auf den Überwachungsbildern dargestellten Überwachungsszene definiert. In dieser ersten möglichen Ausführungsform kann in der dargestellten Überwachungsszene die Linie zur Definition des Schutzbereichs verwendet werden, wobei z. B. ein Überschreiben dieser Linie von anderen Objekten zu einer Alarmgenerierung des Überwachungsmoduls führt. Es ist dabei auch möglich, dass die Linie geschlossen ist, also z.B. einen Kreis oder ein Mehreck bildet, so dass das Überwachungsobjekt innerhalb der geschlossenen Linie angeordnet ist, wobei ein Alarm von dem Überwachungsmodul ausgelöst wird, wenn die Linie überschritten wird oder wenn sich ein anderes Objekt über eine vorgebbare Zeit innerhalb der geschlossenen Linie befindet.

Bei einer bevorzugten Weiterbildung der Erfindung umfasst das Überwachungssystem ein Modellmodul, welches ein Szenenmodell, insbesondere ein 3D-Modell des Überwachungsbereichs bereitstellt. Das Szenemodell kann automatisiert durch das Überwachungssystem erfasst sein, es kann jedoch auch als 3D-Modell manuell erstellt und in dem Modellmodul hinterlegt sein. Insbesondere modelliert das Modellmodul den statischen und/oder quasi-statischen Szenenhintergrund, also die Bereiche des Überwachungsbereichs, die sich nicht oder nur sehr langsam verändern. In dieser Ausgestaltung ist es bevorzugt, dass das Lokalisierungsmodul die Position des Überwachungsobjekts in dem Szenemodul, insbesondere in Bezug auf das Szenenmodell lokalisiert und dass der positionsabhängige Schutzbereich in Abhängigkeit von der Position in dem Szenemodul definiert ist. In dieser Weiterbildung wird die Position des Überwachungsobjekts und des Schutzbereichs virtuell dargestellt.

Bei einer ersten möglichen Alternative ist der Schutzbereich durch eine optional geschlossene Linie, insbesondere mindestens oder genau eine Linie oder ein Linienzug, in dem Szenemodul definiert. Diese Ausgestaltung hat den Vorteil, dass die Linie, der Linienzug oder die geschlossene Linie beispielsweise auf einen Boden des Überwachungsbereichs projiziert werden kann, sodass alle Objekte in den Schutzbereich eindringen oder diesen kontaktieren, die die Linie überqueren und damit verletzen. Beispielsweise kann um das Überwachungsobjekt eine geschlossene Linie gezogen werden, die einen Mindestabstand zu dem Überwachungsobjekt als Schutzbereich definiert.

Bei einer zweiten möglichen Alternative ist der Schutzbereich durch ein Volumen in dem Szenemodul definiert. Ein derartiges Volumen kann beispielsweise als ein Quader definiert sein, es kann jedoch auch als eine Extrusion der geschlossenen Linie in eine Höhe definiert sein, wobei jedes Objekt den Schutzbereich verletzt, welches in das Volumen eindringt und damit verletzt. Es ist auch möglich, dass das Volumen eine Freiform aufweist und auf die jeweilige Anwendung angepasst ist. Derartige Volumen sind in modernen 3D-Modell-CAD-Programmen in einfacher Weise zu erstellen und zu verschieben.

Es ist prinzipiell möglich, dass die Lokalisierung von dem mindestens einen bewegten Überwachungsobjekt in dem Überwachungsbereich durch eine Ortungseinrichtung erfolgt, die in dem Überwachungsbereich aufgestellt ist. So ist es beispielsweise denkbar, dass das Überwachungsobjekt einen Sender trägt, der mittels von Empfängern örtlich geortet werden kann, wobei das Lokalisierungsmodul diese Position als die Position des Überwachungsobjekts lokalisiert.

Es ist jedoch bevorzugt, dass das Lokalisierungsmodul eine Detektionseinheit zur Detektion des Überwachungsobjekts sowie eine Verfolgungseinheit aufweist, so dass die Position des Überwachungsobjekts anhand der Überwachungsbilder durch Bildverarbeitung ermittelbar ist. Verfahren zur Detektion und Verfolgung von Überwachungsobjekten mittels Bildverarbeitung, insbesondere digitaler Bildverarbeitung, sind bekannt. Beispielsweise wird zu möglichen Umsetzungen auf den Artikel A. Yilmaz, O. Javed and M. Shah, Object tracking: A survey. ACM Computing Surveys, Vol. 38(4), Article 13, 2006 verwiesen. In dieser bevorzugten Ausgestaltung bilden die Überwachungsbilder ein Überwachungsvideo mit einer Vielzahl zeitlich aufeinander folgenden Überwachungsbildern. Bei einer möglichen Ausführung werden in einem ersten Schritt bewegte Bereiche in den Überwachungsbildern von dem statischen oder quasi-statischen Szenenhintergrund z.B. durch eine Differenzbildung eines aktuellen Überwachungsbilds von einem Szenenreferenzbild extrahiert. In einem nächsten Schritt werden die bewegte Bereiche segmentiert und dadurch mögliche bewegte Objekte erzeugt. Diese möglichen Überwachungsobjekte werden dann über mehrere Überwachungsbilder hinweg verfolgt, so dass eine Bewegungslinie oder Trajektorie des bewegten Objekts, insbesondere des bewegten Überwachungsobjekts erzeugt wird.

Bei einer bevorzugten Ausbildung der Erfindung wird der Schutzbereich entlang dieser Bewegungslinie mitgeführt. Z.B. wird der Schutzbereich entlang der Bewegungslinie synchron zu der Bewegung des bewegten Überwachungsobjekts parallel verschoben.

Bei einer möglichen Ausgestaltung der Erfindung ist vorgesehen, dass das Definitionsmodul den Schutzbereich durch Benutzerinteraktion definiert. So kann es für die Definition des Schutzbereichs in der dargestellten Überwachungsszene vorgesehen sein, dass ein Benutzer eine Linie oder einen Linienzug um das Überwachungsobjekt mit einem Computereingabegerät, wie z.B. einem Touchpad oder einer Maus, eingibt, indem die Linie in das Überwachungsbild eingezeichnet wird. Die eingezeichnete Linie wird parallel zu dem Überwachungsobjekt in dem Überwachungsbild bzw. in der Überwachungsszene mit verschoben. Alternativ kann vorgesehen sein, dass der Schutzbereich von einem Benutzer in das Szenemodell eingetragen wird; so ist es beispielsweise denkbar, dass der Benutzer eine geschlossene Linie um das Überwachungsobjekt in dem Szenemodul mittels der Eingabeeinrichtung einzeichnet und auf diese Weise den Schutzbereich relativ zu der Position des Überwachungsobjekts festlegt.

Bei möglichen Weiterbildungen der Erfindung kann auch vorgesehen sein, dass der Schutzbereich halbautomatisch oder automatisch festgelegt wird. So ist es möglich, dass dem Überwachungsobjekt manuell oder automatisch über Objekterkennung eine Objektklasse, wie z.B. Personen, Fahrzeuge etc., zugeordnet wird und in Abhängigkeit der Objektklasse der Schutzbereich festlegbar ist. Dabei ist es möglich, dass dem Benutzer mehrere Objektklassen zur Auswahl angeboten werden, sodass die Objektklasse und der Schutzbereich halbautomatisch festgelegt sind. Es ist auch möglich, dass das Überwachungssystem die Objektklasse des Überwachungsobjekts automatisch erkennt und basierend auf einem Regelwerk den Schutzbereich festlegt.

Erfindungsgemäß ist vorgesehen, dass der Schutzbereich anhand von Objekteigenschaften des bewegten Überwachungsobjekts automatisch angepasst wird. Eine derartige Objekteigenschaft ist die Geschwindigkeit des Überwachungsobjekts in dem Überwachungsbereich. So kann beispielsweise vorgesehen sein, dass bei höheren Geschwindigkeiten der Schutzbereich geändert wird. Bewegt sich das Überwachungsobjekt schneller, wird der Schutzbereich vergrößert, da eine erhöhte Gefahr vom Überwachungsobjekt ausgeht, oder das Überwachungsobjekt eine längere Zeit bis zum Stillstand benötigt.

Erfindungsgemäß ist das Uberwachungsmodul ausgebildet, einen Alarm auszugeben für den Fall, dass ein anderes Objekt den Schutzbereich kontaktiert, insbesondere verletzt und sich für eine vorgebbare Mindestdauer in dem Schutzbereich aufhält . Bei einer bevorzugten Ausgestaltung der Erfindung ist das Überwachungsmodul ausgebildet, einen Alarm auszugeben für den Fall, dass ein anderes Objekt bestimmte, durch geeignete Bildverarbeitungsverfahren detektierbare Aktionen im Schutzbereich oder nach Verlassen des Schutzbereichs, wie z.B. schnelles Weglaufen, durchführt.

Ein weiterer Gegenstand betrifft ein Verfahren zur Überwachung des Überwachungsbereichs unter Verwendung des Überwachungssystems wie dieses zuvor beschrieben wurde und ein Computerprogramm.

Weitere Merkmale, Vorteile und Wirkungen der Erfindung ergeben sich aus der nachfolgenden Beschreibung eines bevorzugten Ausführungsbeispiels sowie der beigefügten Figuren. Dabei zeigen:
Figur 1 ein schematisches Blockdiagramm eines Überwachungssystems als ein Ausführungsbeispiel der Erfindung;
Figur 2 eine beispielhafte Überwachungsszene zur Illustration der Funktionsweise des Überwachungssystems in der Figur 1.

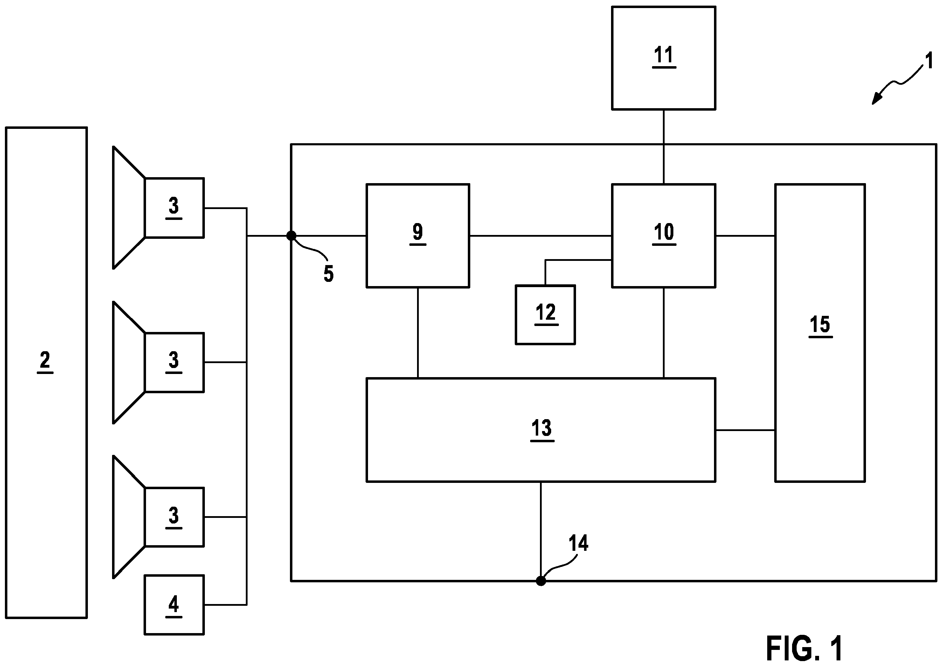

In der Figur 1 ist in einer schematischen Blockdarstellung ein Überwachungssystem 1 als ein Ausführungsbeispiel der Erfindung gezeigt. Das Überwachungssystem 1 dient zur Überwachung eins Überwachungsbereichs 2 und ist beispielsweise mit mehreren Überwachungskameras 3 verbunden und/oder verbindbar. Alternativ oder ergänzend ist das Überwachungssystem 1 mit einer Speichereinrichtung 4 verbunden, welche Überwachungsbilder von den Überwachungskameras 3 zwischenspeichert oder speichert und an das Überwachungssystem 1 ausgibt. Optional umfasst das Überwachungssystem 1 die Überwachungskameras 3 und/oder die Speichereinrichtung 4.

Der Überwachungsbereich 2 kann beispielsweise als ein öffentlicher Platz, ein Straßenzug oder auch als das Innere eines Gebäudes ausgebildet sein. Es ist dabei möglich, dass der Überwachungsbereich 2 zusammenhängend oder - in Abhängigkeit der Verteilung der Überwachungskameras 3 - fragmentiert oder nicht zusammenhängend ausgebildet ist.

Das Überwachungssystem 1 weist eine Eingangsschnittstelle 5 auf, über die die Überwachungsbilder der Überwachungskameras 3 gegebenenfalls unter Zwischenspeicherung in der Speichereinrichtung 4 an das Überwachungssystem 1 übergeben werden. Die Datenankopplung kann dabei kabelgebunden, kabellos und/oder über das Internet erfolgen.

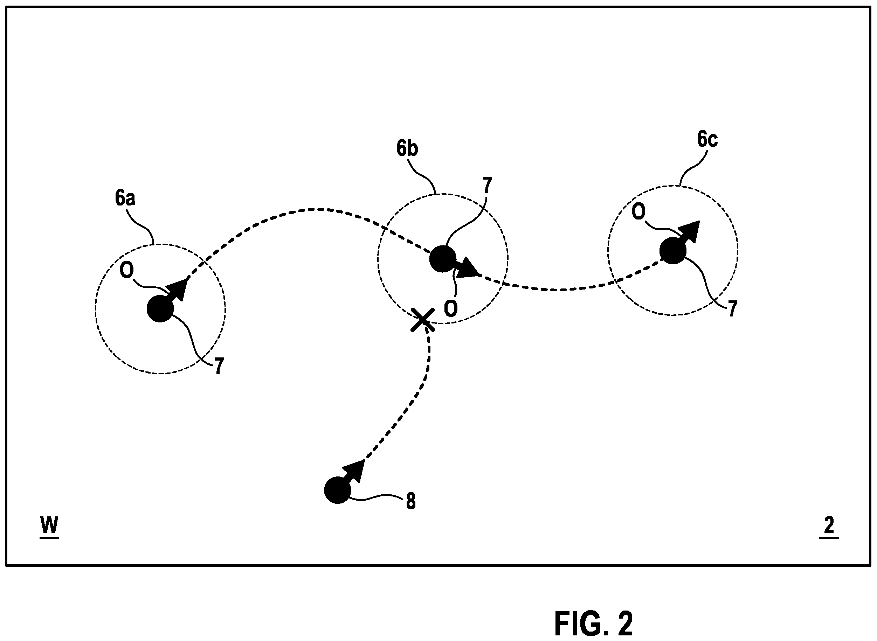

Das Überwachungssystem 1 ist ausgebildet, einen positionsabhängigen Schutzbereich 6 a, b, c (Figur 2) in Abhängigkeit der Position eines Überwachungsobjekts 7 festzulegen und mit dem Überwachungsobjekt 7 in dem Überwachungsbereich 2 mitzuführen.

Zur Erläuterung wird davon ausgegangen, dass in dem Überwachungsbereich 2 das Überwachungsobjekt 7 sowie mindestens ein weiteres Objekt 8 vorhanden sind. Beide Objekte 7,8 sind als bewegte Objekte ausgebildet, also als Objekte, die sich in dem Überwachungsbereich 2 gegenüber einem statischen oder quasi-statischen Hintergrund bewegen.

Das Überwachungssystem 1 umfasst ein Lokalisierungsmodul 9 zur Lokalisierung des Überwachungsobjekts 7 und optional des weiteren Objekts 8. Die Auswahl des Überwachungsobjekts 7 kann manuell durch den Benutzer oder automatisiert erfolgen. Beispielsweise kann ein Benutzer das Überwachungsobjekt durch selektieren, insbesondere anklicken, mit einer Interaktionseinrichtung 11, z.B. einer Computermaus, einem Touchpad o.ä., auswählen. Die Lokalisierung des weiteren Objekts 8 kann auch in einem anderen Modul umgesetzt sein. Als Ergebnis gibt das Lokalisierungsmodul 9 eine aktuelle Position des Überwachungsobjekts 7 sowie optional ergänzend eine aktuelle Position des weiteren Objekts 8 aus. Insbesondere weist das Lokalisierungsmodul 9 eine Detektionseinheit und eine Verfolgungseinheit auf, wobei die Detektionseinheit eine Detektion oder Erkennung des Überwachungsobjekts mittels digitaler Bildverarbeitung und die Verfolgungseinheit die Verfolgung des Überwachungsobjekts über mehrere Überwachungsbilder hinweg ermöglicht, so dass für jedes Überwachungsbild eine aktuelle Position des Überwachungsobjekts 7 oder eine Bewegungslinie des Überwachungsobjekts 7 über mehrere Überwachungsbilder hinweg und damit über die Zeit ermittelt wird.

Die aktuelle Position des Überwachungsobjekts 7 wird in ein Definitionsmodul 10 übergeben, in dem dem Überwachungsobjekt 7 der positionsabhängiger Schutzbereich 6 a, b, c zugewiesen wird. Bei einer Initialisierung oder Neudefinition des Schutzbereichs 6 a, b, c wird dem Überwachungsobjekt 7 wahlweise manuell, haltautomatisch oder auch vollautomatisch der Schutzbereich 6a zugewiesen.

Bei einer manuellen Zuweisung ist beispielsweise vorgesehen, dass über die Interaktionseinrichtung 11 ein Benutzer z.B. durch Anzeichnen von geometrischen Primitiven um das Überwachungsobjekt 7 den Schutzbereich 6a definiert.

Bei einer halbautomatischen Definition kann vorgesehen sein, dass das Überwachungssystem 1, insbesondere das Definitionsmodul 10, verschiedene Möglichkeiten für einen Schutzbereich 6a vorschlägt, wobei eine der Möglichkeiten von dem Benutzer über die Interaktionseinrichtung 11 ausgewählt wird. Bei einer automatischen Definition des Schutzbereichs 6a erfolgt die Definition in Abhängigkeit von weiteren Bildverarbeitungsergebnissen, wie z.B. Personenerkennung, Situationsauswertung, insbesondere Tageszeit, volle/leere Szene etc. Etwaig dafür notwendige Daten zur halbautomatischen oder vollautomatischen Definition des Schutzbereichs werden aus einer Datenbank 12 abgerufen.

Das Definitionsmodul 10 ist ausgebildet, den Schutzbereich 6a in Abhängigkeit der Position des Überwachungsobjekts 7 zu verschieben, um auf diese Weise die weiteren Schutzbereiche 6 b, c zu generieren; so wird der Schutzbereich 6a in der Figur 2 parallel zu der Bewegung des Überwachungsobjekts 7 mit verschoben, wobei die Schutzbereiche 6 a, b, c räumlich betrachtet jeweils die gleiche Relativposition zu dem Überwachungsobjekt 7 einnehmen.

Die derart definierten Schutzbereiche 6 a, b, c werden von dem Definitionsmodul 10 sowie die Position des weiteren Objekts 8 von dem Lokalisierungsmodul 9 oder von einem anderen Modul an ein Überwachungsmodul 13 übergeben. Das Überwachungsmodul 13 ist ausgebildet, zu prüfen, ob das weitere Objekt 8 den Schutzbereich 6 a, b, c verletzt oder kontaktiert oder verlässt..

Zur Prüfung kann in der Datenbank 12 eine vordefinierte Regel hinterlegt werden, wobei beispielsweise von dem Überwachungsmodul 13 geprüft wird, ob das weitere Objekt 8 den Schutzbereich 6 a, b, c betritt, das weitere Objekt 8 sich für eine vorgegebenen Mindestdauer im Schutzbereich 6 a, b, c aufhält oder ob das weitere Objekt 8 mit Bezug oder innerhalb des Schutzbereichs 6 a, b, c verdächtige Aktionen durchführt.

Wird von dem Überwachungsmodul 13 eine Verletzung oder Kontaktierung des Schutzbereichs 6 a, b, c durch das weitere Objekt 8 festgestellt, so wird über eine Alarmschnittstelle 14 ein Alarm z.B. an den Benutzer oder ein Überwachungspersonal ausgegeben.

Dabei ist es auch möglich, dass das Überwachungsobjekt 7 an einer Position bleibt und das weitere Objekt 8 den Schutzbereich 6 a, b, c kontaktiert.

Im Rahmen des beschriebenen Ausführungsbeispiels sind verschiedene Varianten und optionale Ergänzungen möglich:
In einer möglichen einfachen Ausgestaltung wird das Überwachungsobjekt 7 sowie das weitere Objekt 8 nur zweidimensional behandelt, d.h., in dieser Ausgestaltung wird keine Tiefeninformation verwendet. Die Detektion der Objekte 7,8 erfolgt in bekannter Weise dadurch, dass alle bewegten Objekte vom statischen Hintergrund, z.B. durch Subtraktion des aktuellen Überwachungsbildes von einem Referenzbild extrahiert werden. In einem nächsten Schritt werden die Objekte erkannt und über mehrere Überwachungsbilder verfolgt. Die Positionen des Überwachungsobjekts 7 sowie des weiteren Objekts 8 werden nur in Bildkoordinaten des Überwachungsbilds dargestellt. In dieser einfachen Ausgestaltung werden die Schutzbereiche 6 a, b, c beispielsweise interaktiv durch den Benutzer eingezeichnet und ebenfalls nur in der Bildebene definiert, wobei ein Alarm an die Alarmausgangsschnittstelle 14 ausgegeben wird, sobald die Position des weiteren Objekts 8 innerhalb des Schutzbereichs 6 a, b, c angeordnet ist.

Bei einer anderen Ausgestaltung der Erfindung weist das Überwachungssystem 1 ein Szenenmodellmodul 15 auf, in dem ein dreidimensionales Modell des Überwachungsbereichs 2 hinterlegt ist. In dieser Ausführungsform werden die Positionen der beiden Objekte 7,8 in dem Szenenmodell und damit dreidimensional bestimmt. Auch der Schutzbereich 6a,b,c wird dreidimensional definiert. In dieser Ausgestaltung ist es möglich, dass eine Linie oder ein Linienzug auf dem Boden des Überwachungsbereichs definiert wird, wobei ein Alarm an der Alarmausgangsschnittstelle 14 ausgegeben wird, sobald das weitere Objekt 8 den Schutzbereich 6 a, b, c kontaktiert oder verletzt hat. Es ist jedoch auch möglich, dass ein Volumen in dem Szenemodell als Schutzbereich 6a,b,c definiert wird, welcher mit dem Überwachungsobjekt 7 mitgeführt wird. Mathematisch betrachtet definiert der Überwachungsbereich 2 ein Weltkoordinatensystem W, in dem sich das Überwachungsobjekt 7 und das weitere Objekt 8 bewegen. Das Überwachungsobjekt 7 definiert ein mitgeführtes Objektkoordinatensystem O, dessen Ursprung durch die Position des Überwachungsobjekts 7 definiert ist und dessen Ausrichtung wahlweise durch die Ausrichtung des Überwachungsobjekts 7 definiert oder vorgegeben ist. Der Schutzbereich 6 a, b, c nimmt jeweils die gleiche Lage in dem Objektkoordinatensystem O ein, wird jedoch in dem Weltkoordinatensystem W gemeinsam mit dem Überwachungsobjekt 7 bzw. dessen Objektkoordinatensystems O verschoben.

Erfindungsgemäß wird bei den genannten Ausführungsbeispielen eine automatische Anpassung des Schutzbereichs 6 a, b, c für das Überwachungsobjekt 7 durchgeführt, um auf veränderte Objekteigenschaften reagieren zu können. Erfindungsgemäß ändert sich der Schutzbereich 6a,b,c anhand der Geschwindigkeit des Überwachungsobjekts 7 . Fährt das Überwachungsobjekt 7 schneller, wird der Schutzbereich 6 a, b, c vergrößert, da eine erhöhte Gefahr vom Überwachungsobjekt 7 ausgeht oder das Überwachungsobjekt 7 eine längere Zeit bis zum Stillstand benötigt.

## Patentansprüche

1. Überwachungssystem (1) zur Überwachung eines Überwachungsbereichs (2)
mit einer Eingangsschnittstelle (5) zur Übernahme von Überwachungsbildern des Überwachungsbereichs (2),
mit einem Lokalisierungsmodul (9) zur Lokalisierung von mindestens einem bewegten Überwachungsobjekt (7) in dem Überwachungsbereich (2), wobei das Lokalisierungsmodul (9) ausgebildet ist, eine Position des Überwachungsobjekts (7) zu lokalisieren,
mit einem Definitionsmodul (10) zur Definition von einem positionsabhängigen Schutzbereich (6 a, b, c) in dem Überwachungsbereich (2),
mit einem Überwachungsmodul (13) zur Überwachung des Schutzbereichs (2),
wobei das Definitionsmodul (10) ausgebildet ist, den positionsabhängigen Schutzbereich (6a, b, c) in Abhängigkeit von der Position des bewegten Überwachungsobjekts (7) zu definieren,
wobei das Überwachungsmodul (13) ausgebildet ist einen Alarmzustand auszulösen, wenn ein weiteres Objekt (8) den Schutzbereich (6 a, b, c) betritt oder die Schutzbereichsgrenzen verletzt und sich für eine vorgebbare Dauer in dem Schutzbereich (6 a, b, c) aufhält,
**dadurch gekennzeichnet, dass**
das Definitionsmodul (10) den Schutzbereich (6 a, b, c) anhand von Objekteigenschaften des Überwachungsobjekts (7) definiert,
wobei der Schutzbereich (6 a, b, c) zumindest anhand einer Geschwindigkeit des bewegten Überwachungsobjekts (7) als Objekteigenschaft automatisch angepasst ist.

2. Überwachungssystem (1) nach Anspruch 1, **dadurch gekennzeichnet, dass** der Schutzbereich (2) entlang einer Bewegungslinie des Überwachungsobjekts (7) mit dem Überwachungsobjekt (7) mitgeführt wird.

3. Überwachungssystem (1) nach Anspruch 1 oder 2, **dadurch gekennzeichnet, dass** der Schutzbereich (2) durch eine optional geschlossene Linie in einer auf den Überwachungsbildern dargestellten Überwachungsszene definiert ist.

4. Überwachungssystem (1) nach Anspruch 1 oder 2, **gekennzeichnet durch** ein Szenenmodellmodul (15), welches ein Szenenmodell des Überwachungsbereichs (2) bereitstellt, wobei der Schutzbereich (6 a, b, c) durch eine optional geschlossene Linie in dem Szenenmodell definiert ist.

5. Überwachungssystem (1) nach Anspruch 1, 2 oder 4, **gekennzeichnet durch** ein oder das Szenenmodellmodul (15), welches ein Szenenmodell des Überwachungsbereichs (2) bereitstellt, wobei der Schutzbereich (6 a, b, c) durch ein Volumen in dem Szenenmodell definiert ist.

6. Überwachungssystem (1) nach einem der vorhergehenden Ansprüche,
**dadurch gekennzeichnet, dass** das Lokalisierungsmodul (9) eine Detektionseinheit und eine Verfolgungseinheit aufweist, so dass die Position des Überwachungsobjekts (7) anhand der Überwachungsbilder durch Bildverarbeitung ermittelt wird.

7. Überwachungssystem (1) nach einem der vorhergehenden Ansprüche,
**dadurch gekennzeichnet, dass** das Definitionsmodul (10) den Schutzbereich (6 a, b, c) durch Benutzerinteraktion definiert.

8. Überwachungssystem (1) nach einem der vorhergehenden Ansprüche,
**dadurch gekennzeichnet, dass** das Definitionsmodul (10) den Schutzbereich (6 a, b, c) anhand einer Klasse des Überwachungsobjekts (7) definiert.

9. Überwachungssystem (1) nach einem der vorhergehenden Ansprüche,
**dadurch gekennzeichnet, dass** das Überwachungsmodul (13) ausgebildet ist einen Alarmzustand auszulösen, wenn ein weiteres Objekt (8) Aktionen nach einem vorgebbaren Muster in Kontakt oder nach Kontakt mit dem Schutzbereich (6 a, b, c) durchführt.

## Claims

1. Monitoring system (1) for monitoring a monitoring area (2)
having an input interface (5) for accepting monitoring images of the monitoring area (2),
having a locating module (9) for locating at least one moving monitoring object (7) in the monitoring area (2), the locating module (9) being designed to locate a position of the monitoring object (7),
having a definition module (10) for defining a position-dependent protection area (6 a, b, c) in the monitoring area (2),
having a monitoring module (13) for monitoring the protection area (2),
wherein the definition module (10) is designed to define the position-dependent protection area (6 a, b, c) on the basis of the position of the moving monitoring object (7),
wherein the monitoring module (13) is designed to trigger an alarm condition if a further object (8) enters the protection area (6 a, b, c) or transgresses the protection area boundaries and resides in the protection area (6 a, b, c) for a predefinable duration,
**characterized in that**
the definition module (10) defines the protection area (6 a, b, c) on the basis of object properties of the monitoring object (7),
wherein the protection area (6 a, b, c) is automatically adapted at least on the basis of a velocity of the moving monitoring object (7) as an object property.

2. Monitoring system (1) according to Claim 1, **characterized in that** the protection area (2) is carried along with the monitoring object (7) along a line of movement of the monitoring object (7).

3. Monitoring system (1) according to Claim 1 or 2, **characterized in that** the protection area (2) is defined by an optionally closed line in a monitoring scene shown on the monitoring images.

4. Monitoring system (1) according to Claim 1 or 2, **characterized by** a scene model module (15) that provides a scene model of the monitoring area (2), the protection area (6 a, b, c) being defined by an optionally closed line in the scene model.

5. Monitoring system (1) according to Claim 1, 2 or 4, **characterized by** a or the scene model module (15) that provides a scene model of the monitoring area (2), the protection area (6 a, b, c) being defined by a volume in the scene model.

6. Monitoring system (1) according to one of the preceding claims, **characterized in that** the locating module (9) comprises a detection unit and a tracking unit, with the result that the position of the monitoring object (7) is ascertained on the basis of the monitoring images by means of image processing.

7. Monitoring system (1) according to one of the preceding claims, **characterized in that** the definition module (10) defines the protection area (6 a, b, c) by means of user interaction.

8. Monitoring system (1) according to one of the preceding claims, **characterized in that** the definition module (10) defines the protection area (6 a, b, c) on the basis of a class of the monitoring object (7).

9. Monitoring system (1) according to one of the preceding claims, **characterized in that** the monitoring module (13) is designed to trigger an alarm condition if a further object (8) performs actions according to a predefinable pattern in contact or after contact with the protection area (6 a, b, c).

## Revendications

1. Système de surveillance (1) permettant de surveiller une zone à surveiller (2), comprenant
une interface d'entrée (5) permettant de reprendre des images de surveillance de la zone à surveiller (2),
un module de localisation (9) permettant de localiser au moins un objet à surveiller (7) mobile dans la zone à surveiller (2), le module de localisation (9) étant réalisé pour localiser une position de l'objet à surveiller (7),
un module de définition (10) permettant de définir une zone de protection (6 a, b, c) dépendante de la position dans la zone à surveiller (2),
un module de surveillance (13) permettant de surveiller la zone de protection (2),
le module de définition (10) étant réalisé pour définir la zone de protection (6 a, b, c) dépendante de la position en fonction de la position de l'objet à surveiller mobile (7),
dans lequel le module de surveillance (13) est réalisé pour déclencher un état d'alarme si un autre objet (8) entre dans la zone de protection (6 a, b, c) ou enfreint les limites de zone de protection et reste dans la zone de protection (6 a, b, c) pendant une durée prédéfinissable,
**caractérisé en ce que** le module de définition (10) définit la zone de protection (6 a, b, c) à l'aide de propriétés d'objet de l'objet à surveiller (7),
la zone de protection (6 a, b, c) étant adaptée automatiquement au moins à l'aide d'une vitesse de l'objet à surveiller mobile (7) comme propriété d'objet.

2. Système de surveillance (1) selon la revendication 1, **caractérisé en ce que** la zone de protection (2) accompagne l'objet à surveiller (7) le long d'une ligne de déplacement de l'objet à surveiller (7).

3. Système de surveillance (1) selon la revendication 1 ou 2, **caractérisé en ce que** la zone de protection (2) est définie par une ligne, en option fermée, dans une scène à surveiller représentée sur les images de surveillance.

4. Système de surveillance (1) selon la revendication 1 ou 2, **caractérisé par** un module de modèle de scène (15) qui fournit un modèle de scène de la zone à surveiller (2), la zone de protection (6 a, b, c) étant définie par une ligne, en option fermée, dans le modèle de scène.

5. Système de surveillance (1) selon la revendication 1, 2 ou 4, **caractérisé par** un ou le module de modèle de scène (15) qui fournit un modèle de scène de la zone à surveiller (2), la zone de protection (6 a, b, c) étant définie par un volume dans le modèle de scène.

6. Système de surveillance (1) selon l'une quelconque des revendications précédentes, **caractérisé en ce que** le module de localisation (9) présente une unité de détection et une unité de poursuite de sorte que la position de l'objet à surveiller (7) peut être déterminée par traitement d'image à l'aide des images de surveillance.

7. Système de surveillance (1) selon l'une quelconque des revendications précédentes, **caractérisé en ce que** le module de définition (10) définit la zone de protection (6 a, b, c) par une interaction d'utilisateur.

8. Système de surveillance (1) selon l'une quelconque des revendications précédentes, **caractérisé en ce que** le module de définition (10) définit la zone de protection (6 a, b, c) à l'aide d'une classe de l'objet à surveiller (7).

9. Système de surveillance (1) selon l'une quelconque des revendications précédentes, **caractérisé en ce que** le module de surveillance (13) est réalisé pour déclencher un état d'alarme si un autre objet (8) effectue des actions selon un schéma prédéfinissable en cas de contact ou après contact avec la zone de protection (6 a, b, c).
